# NOUVEAU FASCICULE DE BREVET EUROPEEN

(11) **EP 2 703 852 B2**
(45) Date de publication et mention de la décision concernant l'opposition: **08.01.2020**
(45) Mention de la délivrance du brevet: 14.12.2016
(21) Numéro de dépôt: 13178471.2
(22) Date de dépôt: 30.07.2013
(51) Int. Cl.: G02B 6/00, F21S 8/10, F21V 8/00

(54) **Nappe de guidage de lumière avec couplage d'entrée et dioptre à surface de fresnel**
Lichtleitungslage mit Eingangskoppelung und Diopter mit Fresnel-Oberfläche
Light guide sheet with input coupling and dioptre with Fresnel surface

(30) Priorité: 27.08.2012 FR 1258000
(43) Date de publication de la demande: 05.03.2014
(73) Titulaire: VALEO ILUMINACION, 23600 Martos (ES)
(72) Inventeur: Martinez, Juan Manuel, 18014 Granada (ES)
(74) Mandataire: Guyon, Rodolphe C.

(56) Documents cités:
- EP-A1- 1 895 228
- EP-A1- 2 317 214
- DE-A1- 10 309 451
- DE-A1-102005 005 860
- DE-A1-102005 042 523
- DE-A1-102010 046 022
- DE-U1-202005 010 490
- US-A1- 2005 180 158
- US-A1- 2010 097 809
- US-B1- 7 300 185

## Description

L'invention a trait à un guide de lumière notamment pour module et dispositif d'éclairage et/ou de signalisation, notamment pour véhicule automobile. L'invention a trait également à un module et à un dispositif d'éclairage et/ou de signalisation équipé du guide de lumière en question.

Dans le domaine de l'éclairage et de la signalisation de véhicules automobiles, il est de plus en plus fréquent d'utiliser des guides de lumière ou guides optiques. Un guide optique est, très schématiquement, un élément allongé en matière transparente. Il peut présenter une section généralement circulaire. Les rayons lumineux y entrent habituellement par une des extrémités et se propagent par réflexion totale dans la longueur du guide en direction de son extrémité opposée. Une partie des rayons peut sortir via des zones prismatiques à sa surface extérieure. Un guide optique peut également présenter une forme essentiellement plate ou étendue, typiquement avec une section proche d'une forme rectangulaire. Ce type de guide est couramment désigné nappe de guidage ou encore guide plat. Dans ce type de guide optique, les rayons lumineux peuvent être collimatés dans l'épaisseur du guide et se propager par transmission sans réflexion jusqu'à une face de sortie ou jusqu'à une face de réflexion puis une face de sortie.

Les guides optiques peuvent émettre de la lumière sur toute leur longueur. Ils présentent également l'avantage de pouvoir prendre des formes géométriques très variées, être rectilignes ou en arc de cercle, et amener une surface éclairante même dans des zones peu accessibles du projecteur ou du feu du véhicule. Ils participent ainsi fortement au style du projecteur ou du feu.

Le document de brevet FR 2 904 093 A1 a trait à un dispositif d'éclairage ou de signalisation notamment pour véhicule automobile, comprenant une nappe de guidage galbée. La nappe de guidage forme une portion de calotte sphérique et comprend une série de sources lumineuses disposées dans des orifices disposés le long de sa circonférence. Elle comprend une face arrière de réflexion à profil parabolique et une face avant de sortie des rayons. Les rayons lumineux émis par les sources lumineuses se propagent ainsi le long du guide par réflexions successives sur ses surfaces de guidage selon le principe de réflexion totale lorsque l'angle d'incidence est supérieur à un angle limite. Lorsque les rayons rencontrent la surface arrière, ils sont réfléchis vers l'avant du guide et se propagent jusqu'à la surface avant de sortie pour ensuite sortir du guide et former un faisceau d'éclairage ou de signalisation. La face de sortie est généralement planaire avec un profil général en arc de cercle. Le galbe de la nappe de guidage est généralement circulaire de manière à pouvoir encercler un module d'éclairage. La nappe est également assez mince. La nappe de guidage de cet enseignement n'est en fait pas véritablement adaptée à des rayons de courbure réduit et/ou à des épaisseurs de nappe plus importantes. En effet, aux zones de courbure importante et plus particulièrement d'épaisseur importante, les rayons lumineux se propageant par réflexion successive selon le principe de réflexion totale risquent de rencontrer une des surfaces de guidage suivant un angle d'incidence inférieur à l'angle d'incidence limite et ainsi sortir du guide. De tels rayons ne participent pas au faisceau d'éclairage si bien que des portions sombres du faisceau apparaissent à ces zones de courbure importante.

Le document de brevet FR 2 941 785 A1 a trait également à un dispositif d'éclairage ou de signalisation notamment pour véhicule automobile, comprenant une nappe de guidage galbée. La face avant de sortie de la nappe présente une forme non planaire et la face arrière de réflexion est dimensionnée pour réfléchir les rayons de manière adéquate vers la face de sortie. Tout comme dans l'enseignement discuté précédemment, les rayons lumineux émis par les sources lumineuses se propagent le long du guide par réflexions successives sur ses surfaces de guidage selon le principe de réflexion totale lorsque l'angle d'incidence est supérieur à un angle limite.

Le document de brevet FR 2 943 118 A1 a trait à un dispositif d'éclairage ou de signalisation notamment pour véhicule automobile, comprenant une nappe de guidage. Plus particulièrement, cet enseignement a trait à un dispositif de couplage de la nappe de guidage. Ce dispositif de couplage est en fait une portion de la nappe destinée à assurer le couplage entre une source lumineuse et la nappe. Il comprend essentiellement une surface de réflexion à forme complexe disposée sur la surface de guidage qui est opposée à la source lumineuse. Cette surface de réflexion est configurée pour réfléchir une première partie des rayons émis par la source lumineuse, et ce directement vers la face avant du guide et une deuxième partie vers la face arrière de réflexion. La première partie des rayons correspond à un secteur réduit, typiquement inférieur ou égal à 20° alors que la deuxième partie des rayons couvre habituellement un secteur de plus de 180°. Le coupleur est configuré pour que les rayons se propageant dans la nappe soient essentiellement collimatés dans son l'épaisseur. En cas de courbure importante de la nappe, certains des rayons provenant du coupleur et dirigés vers la face arrière de réflexion peuvent rencontrer l'une des surfaces de guidage de la nappe avant de rencontrer la face de réflexion. Compte tenu de l'angle d'incidence important, ces rayons vont être réfléchis et leur trajectoire va être modifiée. Il en résulte alors une perte de qualité du faisceau émis par une diminution de son homogénéité.

La demande de brevet EP 1895228 propose la réalisation d'un dispositif projecteur permettant d'avoir un aspect guide de lumière pour réaliser de nouveaux concepts de style dans différents feux de signalisation et d'éclairage, comprenant une zone de sortie, une zone d'entrée avec un système optique pour collimater les rayons lumineux provenant d'une source lumineuse et une zone centrale avec un autre système optique pour collimater les rayons lumineux collimatés par le système optique de la zone d'entrée. Néanmoins, la structure et la forme de ce système optique de la zone d'entrée n'est pas optimisé pour assurer la collimation des rayons lumineux provenant de la source lumineuse selon des plans parallèles au plans moyen du guide, ce qui cause une diminution de l'efficacité du guide de lumière.

L'invention a pour objectif de proposer une solution à au moins un des inconvénients sus mentionnés. Plus particulièrement, l'invention a pour objectif de proposer un guide de lumière apte à décrire une courbure selon un rayon réduit et/ou d'épaisseur importante sans pour autant présenter d'inhomogénéité notoire à la portion courbée. Plus particulièrement encore, l'invention a également pour objectif de proposer un guide de lumière, notamment du type nappe, avec des dimensions réduites.

L'invention a pour objet un guide de lumière en matériau transparent, tel que défini dans la revendication 1, comprenant: une face d'entrée des rayons lumineux émis par une source lumineuse; une face de sortie des rayons lumineux; des moyens de réfraction situés sur le chemin optique d'une fraction des rayons lumineux se propageant entre la face d'entrée et la face de sortie, et configurés de manière à collimater ladite fraction de rayons lumineux traversant lesdits moyens.

Selon l'invention, le guide comprend des moyens de couplage avec la source lumineuse aptes à collimater, préférentiellement exclusivement, dans l'épaisseur du guide les rayons entrant par la face d'entrée.

Selon un mode avantageux de l'invention, les moyens de réfraction comprennent un dioptre avec surface de Fresnel.

La face d'entrée est préférentiellement au moins essentiellement plane. La face de sortie est préférentiellement au moins essentiellement plane.

Selon l'invention, les moyens de réfraction ne sont traversés que par la fraction sus mentionnée des rayons lumineux se propageant entre la face d'entrée et la face de sortie, une autre fraction desdits rayons lumineux étant collimatée par une face de réflexion parabolique du guide.

La fraction des rayons lumineux traversant les moyens de réfraction peut correspondre à plus de 20%, préférentiellement 30%, plus préférentiellement 40% du flux lumineux se propageant dans le guide depuis la source lumineuse. L'autre fraction des rayons lumineux collimatée par une face de réflexion parabolique du guide peut correspondre à plus de 20%, préférentiellement 30%, plus préférentiellement 40% du flux lumineux.

Selon l'invention, le guide de lumière comprend plusieurs faces de réflexion similaires s'étendant successivement le long de la face de sortie, formant ainsi un motif répétitif.

Selon un encore autre mode avantageux de l'invention, le guide de lumière est généralement plat avec une épaisseur donnée et la collimation par les moyens de réfraction et/ou par la face de réflexion parabolique est opérée, préférentiellement exclusivement, dans des plans parallèles au plan moyen du guide.

Selon l'invention, la face de réflexion parabolique s'étend symétriquement de part et d'autre de la face d'entrée, les moyens de réfraction étant disposés sur une portion du guide s'étendant entre la face d'entrée et la face de sortie et dont la largeur correspond préférentiellement à celle de la face d'entrée.

Les moyens de réfraction sont distincts et/ou à distance des moyens de couplage.

Selon l'invention, les moyens de couplage comprennent une cavité sur la face d'entrée au niveau du foyer du profil parabolique de la surface de réflexion, la cavité comprenant une surface de révolution apte à réfracter les rayons provenant de la source lumineuse située dans la cavité et la rencontrant, de manière à les collimater dans l'épaisseur du guide.

Selon l'invention, les moyens de couplage comprennent une surface de réflexion sur au moins une des faces du guide formant son épaisseur, ladite surface étant une surface de révolution apte à réfléchir les rayons provenant d'une source lumineuse située dans la cavité et la rencontrant, de manière à les collimater dans l'épaisseur du guide.

Selon un encore autre mode avantageux de l'invention, la surface de la cavité a une forme générale de diabolo sur au moins 150°, préférentiellement sur essentiellement 180°, et la surface de réflexion sur une ou chacune des faces du guide formant son épaisseur a une forme générale de cône centré sur l'axe de révolution de la surface de la cavité.

Selon l'invention, le matériau transparent du guide est d'un premier indice de réfraction n₁ et les moyens de réfraction comprennent deux dioptres formés par un volume à l'intérieur du guide d'un deuxième indice de réfraction n₂ différent de, préférentiellement inférieur à, l'indice de réfraction n₁ du guide, ledit volume étant préférentiellement de l'air.

Selon un encore autre mode avantageux de l'invention, le volume du deuxième indice de réfraction n₂ forme un premier dioptre de profil circulaire centré sur la face d'entrée et un deuxième dioptre avec surface de Fresnel généralement parallèle au premier, les premier et deuxième dioptres étant successivement traversés par les rayons lumineux.

Selon un encore autre mode avantageux de l'invention, les moyens de réfraction sont situés sur une portion du guide correspondant à la première moitié du guide de la face d'entrée vers la face de sortie.

Selon un encore autre mode avantageux de l'invention, les moyens de réfraction s'étendent sur la majorité, préférentiellement sur la totalité de l'épaisseur du guide.

L'invention a également pour objet un dispositif d'éclairage et/ou de signalisation comprenant un guide lumière et au moins une source lumineuse, remarquable en ce que le guide de lumière est conforme à l'invention.

Les mesures de l'invention permettent de réaliser une guide de lumière avec des moyens de couplage de taille réduite. Une fraction centrale des rayons est en effet collimatée par des moyens de réfraction situés entre la face d'entrée et la face de sortie, le reste des rayons pouvant alors être collimaté par d'autres moyens tels que, par exemple, par une face réfléchissante parabolique s'étendant de part et d'autre de la fraction centrale des rayons. Dans le cas d'une nappe de guidage, le premier collimatage dans l'épaisseur du guide assuré par les moyens de couplage permet aux rayons de se propager par transmission et, partant, d'utiliser des épaisseurs de nappe plus importantes. La compacité permet de discrétiser davantage le guide de lumière avec des motifs de petite taille. Elle permet ainsi au guide d'avoir des profils avec de faibles rayons de courbure, chaque motif restant essentiellement plat, la courbure étant assurée au niveau de jonctions entre les motifs. La discrétisation du guide lui permet ainsi d'assurer une homogénéité d'éclairage tout en pouvant suivre des rayons de courbure réduits et/ou tout en ayant une épaisseur importante.

D'autres caractéristiques et avantages de la présente invention seront mieux compris à l'aide de la description et des dessins parmi lesquels :
la figure 1 est une vue en perspective d'un guide de lumière selon un premier mode de réalisation de l'invention ;
la figure 2 est une illustration d'une portion du guide de la lumière de la figure 1, illustrant la collimation des rayons dans l'épaisseur de la nappe ;
la figure 3 est une vue en élévation d'une portion du guide de lumière de la figure 1, illustrant la collimation des rayons dans le plan de la nappe.

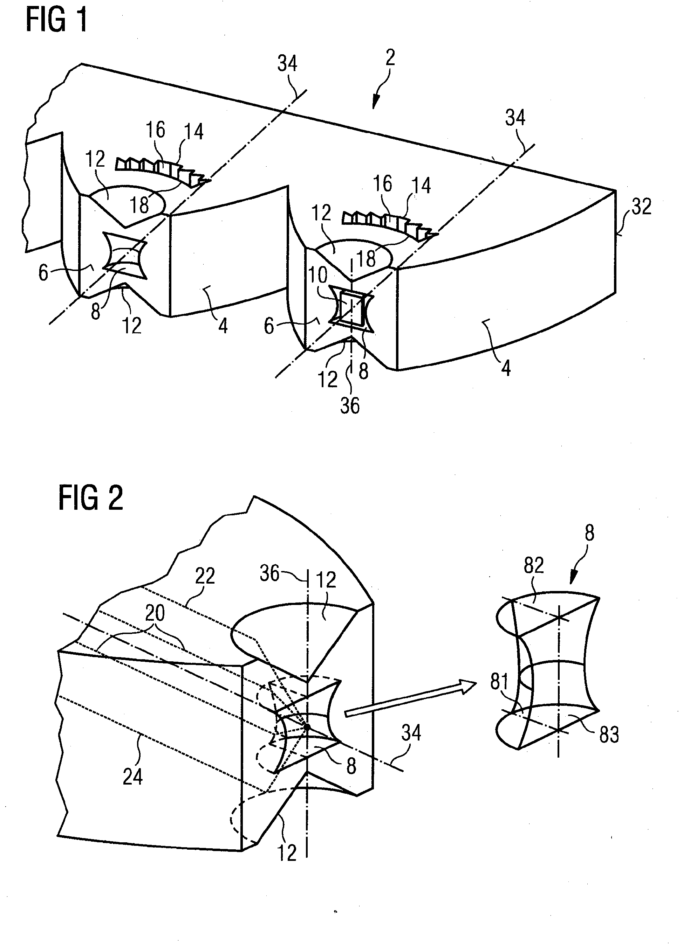

Les figures 1 à 3 illustrent un premier mode de réalisation de l'invention. A la figure 1, on peut observer une représentation en perspective d'une partie de guide de lumière 2. Ce dernier s'étend selon une direction longitudinale qui correspond à une direction essentiellement horizontale sur la figure 1. Le guide 2 est généralement plat, c'est-à-dire avec deux faces généralement parallèles, l'une correspondant à une face supérieure et l'autre correspondant à une face inférieure en référence à l'orientation du guide sur la figure 1. Un tel guide est communément appelé nappe de guidage. Il est en matériau transparent solide tel que du polycarbonate. Il comprend une série de faces arrière 4 à profil parabolique et formant un motif répétitif le long du guide. Une face d'entrée 6 est prévue au milieu de chaque face arrière 4. Elle comprend une cavité 8 destinée à recevoir une source lumineuse 10 notamment du type diode à électroluminescence. La cavité est délimitée par une surface de révolution autour d'un axe 36 généralement perpendiculaire au plan moyen du guide ou aux faces supérieure et inférieure du guide formant son épaisseur, et compris dans le plan de la face d'entrée 6. Une surface de réflexion 12 à profil essentiellement en V est prévue sur chacune des faces supérieure et inférieure du guide. Les axes de révolution de ces deux surfaces 12 sont confondus avec l'axe de révolution de la surface de la cavité 8. La surface de la cavité 8 et les surfaces de réflexion 12 sont configurées pour réfracter et réfléchir, respectivement, les rayons lumineux émis par la source lumineuse de manière à les collimater dans l'épaisseur du guide, c'est-à-dire de manière à ce qu'ils se propagent dans le guide selon des directions parallèles au plan moyen du guide.

Le guide 2 comprend également des moyens de réfraction avec un volume d'air 16 traversant son épaisseur. Ce volume d'air constitue deux dioptres 18 et 14. Le premier dioptre 18 traversé par les rayons provenant de la face d'entrée est de profil généralement circulaire centré sur l'axe de révolution 36 des surfaces de réflexion 12 et de la surface de la cavité 8. Les rayons y sont donc incidents selon un angle essentiellement nul. Ils ne sont donc pas réfractés et traversent ce dioptre et le volume d'air sans déviation notoire. Le deuxième dioptre 14 a un profil de Fresnel configuré pour collimater les rayons le traversant dans des plans parallèles au plan moyen du guide suivant une direction correspondant à l'axe optique 34 du guide, plus précisément l'axe optique 34 du motif du guide. Cette direction peut être généralement perpendiculaire à la face de sortie 32 de manière à ce que les rayons traversant la face de sortie ne soient pas déviés.

La figure 2 est une vue en transparence de la partie arrière d'un motif du guide 2 de la figure 1, illustrant les moyens de couplage à la face d'entrée et la collimation dans l'épaisseur du guide. En effet, on peut observer que les rayons 20 émis par la source lumineuse (non représentée à la figure 2 pour des raisons de clarté) et rencontrant la surface de révolution 81 de la cavité 8 sont réfractés de manière à se propager dans des plans parallèles au plan moyen du guide. La surface de la cavité peut être facilement calculée en application de la loi de Snell-Descartes, similairement à une lentille convexe. On peut également observer que les rayons 22 et 24 émis par la source lumineuse et rencontrant les surfaces demi-circulaires 82 et 83 de la cavité 8 y sont réfractés et sont ensuite réfléchis par les surfaces de réflexion 12, de manière à se propager également dans des plans parallèles au plan moyen du guide. Le profil des surfaces de réflexion peut ainsi s'apparenter à une parabole dont le foyer correspond au centre de la source lumineuse. Ce profil parabolique peut toutefois être corrigé notamment par calcul en raison de la réfraction subie par les rayons traversant les surfaces demi-circulaires de la cavité 8. La réflexion sur les surfaces de réflexion 82 et 83 est préférentiellement opérée par application du principe de réflexion totale.

Les rayons 20, 22 et 24 sont ainsi collimatés dans l'épaisseur du guide ou, autrement dit, collimatés dans des plans perpendiculaires au plan moyeu du guide et passant par la source lumineuse. La majorité, préférentiellement plus de 80% des rayons lumineux émis par la source lumineuse dans la cavité sont ainsi collimatés dans l'épaisseur du guide.

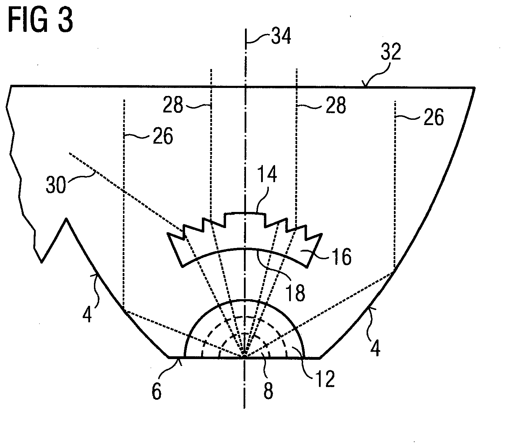

La figure 3 est une vue en élévation d'une des portions de guide des figures 1 et 2, illustrant la collimation des rayons dans des plans parallèles au plan moyen du guide. On peut en effet observer que les rayons lumineux 28 qui forment une fraction des rayons lumineux rencontrent les dioptres 18 et 14 et sont déviés dans des plans parallèles de manière à être ainsi totalement collimatés, c'est-à-dire parallèles entre eux et à l'axe optique 34 du guide. En effet, cette fraction des rayons correspond à un secteur des rayons se propageant dans le guide depuis la source lumineuse, ce secteur étant centré sur l'axe optique 34 du guide et correspondant aux rayons qui rencontrent les premier et deuxième dioptres 18 et 14. Ces dioptres sont formés par un volume d'air 16 sur le chemin optique des rayons dans le guide et présentant un indice de réfraction n₂ proche de 1 et donc inférieur à l'indice de réfraction n₁ du matériau solide formant le guide (de l'ordre de 1.58 pour du polycarbonate). Le premier dioptre 18 à l'interface entre le matériau du guide et le volume d'air 16 présente un profil généralement circulaire centré sur l'axe de révolution de la surface de la cavité 8 et des surfaces de réflexion 12, de manière à ne pas dévier les rayons le traversant. Le deuxième dioptre a une surface de Fresnel apte à réfracter et collimater les rayons provenant d'un foyer correspondant à la source lumineuse, à la manière d'une lentille convergente. Certains rayons tels que le rayon 30 rencontrant une des surfaces de liaison de la surface de Fresnel sont déviés latéralement de manière non désirée. Ces rayons non collimatés constituent une minorité des rayons traversant les dioptres. Le principe de lentille et de surface de Fresnel est bien connu en soi de l'homme de métier et n'est pas davantage détaillé.

Les autres rayons 26 formant ainsi une autre fraction des rayons se propageant dans le guide depuis la source lumineuse, sont majoritairement réfléchis par la face de réflexion parabolique 4 de manière à être également collimatés selon l'axe optique 34 du guide. Le profil parabolique de la face de réflexion est tel que son foyer correspond essentiellement à la source lumineuse. De plus, en fonction de la géométrie du guide, les rayons rencontrent cette face avec un angle supérieur à l'angle limite de réfraction, et subissent par conséquent une réflexion conformément au principe de réflexion totale selon la loi de Snell-Descartes. Dans ce cas, la face de réflexion n'a pas besoin d'être pourvue d'un revêtement réfléchissant.

Grâce aux moyens de couplage qui ont été détaillés en relation avec la figure 2, les rayons émis par la source lumineuse, en particulier d'une source lumineuse du type diode à électroluminescence éclairant essentiellement dans un demi-espace dirigé vers la face d'entrée, sont guidé vers le guide et collimatés uniquement dans l'épaisseur du guide. Ils peuvent ainsi s'y propager par transmission radialement par rapport à l'axe 36 de la source lumineuse. Grâce aux moyens de réfraction formés par le volume d'air 16 et les premier et deuxième dioptres 18 et 14, une fraction de ces rayons collimatés dans l'épaisseur du guide est ensuite collimatée dans une direction perpendiculaire de manière à être totalement collimatés suivant l'axe optique. L'autre fraction des rayons est réfléchie et collimatée dans une même direction de manière à être également totalement collimatés suivant l'axe optique. Cette construction permet ainsi d'obtenir un faisceau collimaté avec une géométrie très réduite. En effet, la distance entre la face d'entrée et la face de sortie peut être réduite et, de plus, le volume d'air formant deux dioptres peut être mince. L'utilisation d'une surface de Fresnel est également particulièrement avantageuse dans cette logique de compacité.

Il est à noter que les moyens de réfraction pourraient comprendre, au lieu du volume d'air décrit ci-avant, un insert en un matériau transparent autre que celui du guide ou du moins ayant un indice de réfraction différent de manière former les dioptres. Indépendamment du matériau transparent remplissant le volume des moyens de réfraction, il est également à noter que les dioptres peuvent prendre d'autres formes. Le premier dioptre peut ne pas être circulaire ou cylindrique, de manière à dévier de manière contrôlée au moins une partie des rayons. Le deuxième dioptre peut ne pas être à surface de Fresnel. En effet, un profil du type concave similaire à celui d'une lentille peut être envisagé en fonction de la place disponible étant entendu que l'utilisation d'une surface de Fresnel est particulièrement intéressante d'un point de vue taille et compacité.

## Revendications

1. Guide de lumière (2) en matériau transparent, comprenant:
- une face d'entrée (6) des rayons lumineux émis par une source lumineuse (10) ;
- une face de sortie (32) des rayons lumineux ;
- au moins deux faces de réflexion (4) paraboliques similaires et s'étendant successivement le long de la face de sortie (32), formant ainsi un motif répétitif ;
- des moyens de réfraction (14, 16, 18) situés sur le chemin optique d'une fraction des rayons lumineux se propageant entre la face d'entrée (6) et la face de sortie (32), et configurés de manière à collimater ladite fraction de rayons lumineux traversant lesdits moyens ;
- des moyens de couplage (8, 12) avec la source lumineuse (10) aptes à collimater, préférentiellement exclusivement, dans l'épaisseur du guide les rayons entrant par la face d'entrée (6) ;
**caractérisé ce que** les moyens de couplage comprennent une cavité (8) sur la face d'entrée (6) au niveau du foyer du profil parabolique de chaque face de réflexion (4), la cavité (8) comprenant une première surface de révolution (81) autour d'un axe (36) perpendiculaire au plan moyen du guide et compris dans un plan de la face d'entrée (6), la cavité (8) étant apte à réfracter les rayons provenant de la source lumineuse (10) située dans la cavité et rencontrant la première surface de révolution (81), de manière à collimater lesdits rayons dans l'épaisseur du guide dans des plans parallèles au plan moyen du guide ;
**en ce que** les moyens de couplage comprennent aussi une surface de réflexion (12) sur une ou chacune des faces du guide formant son épaisseur, la surface de réflexion étant une deuxième surface de révolution autour de l'axe (36) et ayant une forme de cône, de sorte que la surface de réflexion (12) est apte à réfléchir les rayons provenant de la source lumineuse (10) située dans la cavité et rencontrant la deuxième surface de révolution, de manière à collimater les rayons dans l'épaisseur du guide selon des directions parallèles au plan moyen du guide
**en ce que** les moyens de réfraction (14, 16, 18) ne sont traversés que par la fraction des rayons lumineux se propageant entre la face d'entrée (6) et la face de sortie (32), une autre fraction desdits rayons lumineux étant collimatée par l'une des faces de réflexion paraboliques (4) du guide ;
**en ce que** le matériau transparent du guide est d'un premier indice de réfraction et les moyens de réfraction (14, 16, 18) comprennent deux dioptres (14, 18) formés par un volume (16) à l'intérieur du guide d'un deuxième indice de réfraction n2 différent de, préférentiellement inférieur à, l'indice de réfraction n1 du guide, ledit volume étant préférentiellement de l'air ;
**et en ce que** chaque face de réflexion parabolique (4) s'étend symétriquement de part et d'autre de la face d'entrée (6), les moyens de réfraction (14, 16, 18) étant disposés sur une portion du guide s'étendant entre la face d'entrée (6) et la face de sortie (32) et dont la largeur correspond préférentiellement à celle de la face d'entrée (6).

2. Guide de lumière (2) selon la revendication 1, **caractérisé en ce que** les moyens de réfraction (14, 16, 18) comprennent un dioptre avec surface de Fresnel (14).

3. Guide de lumière (2) selon l'une des revendications 1 ou 2, **caractérisé en ce que** le volume du deuxième indice de réfraction n₂ forme un premier dioptre (18) de profil circulaire centré sur la face d'entrée et un deuxième dioptre (14) avec surface de Fresnel généralement parallèle au premier, les premier et deuxième dioptres (18, 14) étant successivement traversés par les rayons lumineux.

4. Guide de lumière (2) selon l'une des revendications 1 à 3, **caractérisé en ce que** les moyens de réfraction (14, 16, 18) sont situés sur une portion du guide correspondant à la première moitié du guide de la face d'entrée vers la face de sortie.

5. Guide de lumière (2 ; 102) selon l'une des revendications 1 à 4, **caractérisé en ce que** les moyens de réfraction (14, 16, 18) s'étendent sur la majorité, préférentiellement sur la totalité de l'épaisseur du guide.

6. Dispositif d'éclairage et/ou de signalisation comprenant un guide lumière et au moins une source lumineuse, **caractérisé en ce que** le guide de lumière (2) est conforme à l'une des revendications 1 à 5.

## Patentansprüche

1. Lichtleiter (2) aus lichtdurchlässigem Material, mit
- einer Fläche (6) zum Eintritt der von einer Lichtquelle (10) emittierten Lichtstahlen;
- einer Fläche (32) zum Austritt der Lichtstrahlen;
- mindestens zwei ähnliche parabolische Reflexionsflächen (4), die sich nacheinander entlang der Austrittsfläche (32) erstrecken, wodurch ein sich wiederholendes Muster gebildet wird.,
- Brechungsmitteln (14, 16, 18), die im optischen Weg eines sich zwischen der Eintrittsfläche (6) und der Austrittsfläche (32) ausbreitenden Lichtstrahlenanteils liegen und solchermaßen ausgebildet sind, dass sie den diese Mittel durchquerenden Lichtstrahlenanteil kollimieren;
- Mitteln (8, 12) zum Koppeln mit der Lichtquelle (10), die die durch die Eintrittsfläche (6) eintretenden Strahlen vorzugsweise ausschließlich in der Dicke des Lichtleiters zu kollimieren vermögen;
**dadurch gekennzeichnet, dass** die Kopplungsmittel eine Höhlung (8) an der Eintrittsfläche (6) im Brennpunkt des Parabelprofils jeder Reflexionsfläche (4) aufweisen, wobei die Höhlung (8) eine erste Rotationsfläche (81) um eine Achse (36) aufweist, die senkrecht zur Mittelebene des Lichtleiters verläuft und in einer Ebene der Eintrittsfläche (6) liegt, wobei die Höhlung (8) die von der in der Höhlung angeordneten Lichtquelle (10) stammenden und auf die erste Rotationsfläche (81) treffenden Lichtstrahlen zu brechen vermag, derart, dass die Lichtstrahlen in der Dicke des Lichtleiters in zur Mittelebene des Lichtleiters parallelen Ebenen kollimiert werden;
dass die Kopplungsmittel auch eine Reflexionsfläche (12) auf einer oder jeder seine Dicke bildenden Seiten des Lichtleiters aufweisen, wobei die Reflexionsfläche eine zweite Rotationsfläche um die Achse (36) ist und eine konusartige Form hat, derart, dass die Reflexionsfläche (12) die von der in der Höhlung angeordneten Lichtquelle (10) stammenden und auf die zweite Rotationsfläche treffenden Lichtstrahlen zu reflektieren vermag, derart, dass die Lichtstrahlen in der Dicke des Lichtleiters in zur Mittelebene des Lichtleiters parallelen Richtungen kollimiert werden;
dass die Brechungsmittel (14, 16, 18) nur von dem sich zwischen der Eintrittsfläche (6) und der Austrittsfläche (32) ausbreitenden Lichtstrahlenanteil durchquert werden, wobei ein anderer Teil der Lichtstrahlen durch eine der parabolische Reflexionsflächen (4) des Lichtleiters kollimiert wird,
dass das lichtdurchlässige Material des Lichtleiters einen ersten Brechungsindex n1 hat und die Brechungsmittel (14, 16, 18) zwei Diopter (14, 18) umfassen, die durch ein Volumen (16) innen im Lichtleiter mit einem zweiten Brechungsindex n2 gebildet sind, der sich von dem Brechungsindex n1 des Lichtleiters unterscheidet und vorzugsweise kleiner ist als dieser, wobei es sich bei dem Volumen vorzugsweise um Luft handelt,
und dass die parabolische Reflexionsfläche (4) symmetrisch beidseits der Eintrittsfläche (6) verläuft, wobei die Brechungsmittel (14, 16, 18) auf einem Stück des Lichtleiters angeordnet sind, das sich zwischen der Eintrittsfläche (6) und der Austrittsfläche (32) erstreckt und dessen Breite vorzugsweise der der Eintrittsfläche (6) entspricht.

2. Lichtleiter (2) nach Anspruch 1, **dadurch gekennzeichnet, dass** die Brechungsmittel (14, 16, 18) einen Diopter mit Fresnel-Oberfläche (14) umfassen.

3. Lichtleiter (2) nach Anspruch 1 or 2, **dadurch gekennzeichnet, dass** das Volumen des zweiten Brechungsindex n2 einen auf die Eintrittsfläche zentrierten ersten Diopter (18) mit kreisförmigem Profil und einen zum ersten im Wesentlichen parallelen zweiten Diopter (14) mit Fresnel-Oberfläche bildet, wobei der erste und der zweite Diopter (18, 14) nacheinander von den Lichtstrahlen durchquert werden.

4. Lichtleiter (2) nach einem der Ansprüche 1 bis 3, **dadurch gekennzeichnet, dass** die Brechungsmittel (14, 16, 18) auf einem Stück des Lichtleiters angeordnet sind, das der ersten Lichtleiterhälfte zwischen Eintrittsfläche und Austrittsfläche entspricht.

5. Lichtleiter (2) nach einem der Ansprüche 1 bis 4, **dadurch gekennzeichnet, dass** sich die Brechungsmittel (14, 16, 18) über den überwiegenden Teil, vorzugsweise die Gesamtheit der Dicke des Lichtleiters erstrecken.

6. Beleuchtungs- und/oder Signalgebungsvorrichtung mit einem Lichtleiter und wenigstens einer Lichtquelle, **dadurch gekennzeichnet, dass** der Lichtleiter (2) einem der Ansprüche 1 bis 5 entspricht.

## Claims

1. Light guide (2) made from transparent material, comprising:
- an entry face (6) for the light rays emitted by a light source (10);
- an exit face (32) for the light rays;
- at least two similar parabolic reflection faces (4) extending successively along the exit face (32), thereby forming a repeating pattern,
- refraction means (14, 16, 18) situated on the optical path of a proportion of the light rays propagating between the entry face (6) and the exit face (32), and configured so as to collimate said portion of light rays passing through said means;
- means (8, 12) for coupling with the light source (10) able to collimate, preferentially exclusively, in the thickness of the guide, the rays entering through the entry face (6);
**characterised in that** the coupling means comprise a cavity (8) on the entry face (6) at the focus of the parabolic profile of each reflection face (4), the cavity (8) comprising a first surface (81) of revolution about an axis (36) perpendicular to the midplane of the guide and lying in a plane of the entry face (6), the cavity (8) being able to refract the rays coming from the light source (10) situated in the cavity and encountering the first surface of revolution (81), so as to collimate said rays in the thickness of the guide in planes parallel to the midplane of the guide;
**in that** the coupling means also comprise a reflection surface (12) on one or each of the faces of the guide forming its thickness, the reflection surface being a second surface of revolution about the axis (36) and having a cone shape, so that the reflection surface (12) is able to reflect the rays coming from the light source (10) situated in the cavity and encountering the second surface of revolution, so as to collimate said rays in the thickness of the guide in directions parallel to the midplane of the guide,
**in that** the refraction means (14, 16, 18) have only the portion of light rays propagating between the entry face (6) and the exit face (32) passing through them, another portion of said light rays being collimated by one of the parabolic reflection faces (4) of the guide,
**in that** the transparent material of the guide has a first refractive index n1 and the refraction means (14, 16, 18) comprise two dioptres (14, 18) formed by a space (16) inside the guide with a second refractive index n2 different from, preferentially less than, the refractive index n1 of the guide, said space preferably being air,
and **in that** each parabolic reflection face (4) extends symmetrically on either side of the entry face (6), the refraction means (14, 16, 18) being disposed on a portion of the guide extending between the entry face (6) and the exit face (32) and the width of which corresponds preferentially to that of the entry face (6).

2. Light guide (2) according to claim 1, **characterised in that** the refraction means (14, 16, 18) comprise a dioptre with a Fresnel surface (14).

3. Light guide (2) according to claim 1 or 2, **characterised in that** the space with the second refractive index n2 forms a first dioptre (18) with a circular profile centred on the entry face and a second dioptre (14) with a Fresnel surface generally parallel to the first, the first and second dioptres (18, 14) having the light rays successively pass through them.

4. Light guide (2) according to one of claims 1 to 3, **characterised in that** the refraction means (14, 16, 18) are situated on a portion of the guide corresponding to the first half of the guide from the entry face towards the exit face.

5. Light guide (2) according to one of claims 1 to 4, **characterised in that** the refraction means (14, 16, 18) extend over the majority, preferentially over the whole, of the thickness of the guide.

6. Lighting and/or signalling device comprising a light guide and at least one light source, **characterised in that** the light guide (2) is in accordance with one of claims 1 to 5.
